(19) Europäisches Patentamt / European Patent Office / Office européen des brevets

(11) **EP 4 358 178 A1**

(12) **EUROPEAN PATENT APPLICATION**
published in accordance with Art. 153(4) EPC

(43) Date of publication:
**24.04.2024 Bulletin 2024/17**

(21) Application number: **22852695.0**

(22) Date of filing: **22.06.2022**

(51) International Patent Classification (IPC):
*H01M 4/133* (2010.01)   *H01M 4/587* (2010.01)
*H01M 4/62* (2006.01)   *H01G 11/42* (2013.01)
*H01M 10/052* (2010.01)

(52) Cooperative Patent Classification (CPC):
**H01G 11/42; H01M 4/133; H01M 4/587;**
**H01M 4/62; H01M 10/052;** Y02E 60/10

(86) International application number:
**PCT/JP2022/024787**

(87) International publication number:
**WO 2023/013269 (09.02.2023 Gazette 2023/06)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **06.08.2021 JP 2021130020**

(71) Applicant: **GS Yuasa International Ltd.**
**Kisshoin, Minami-ku,**
**Kyoto-shi, Kyoto 601-8520 (JP)**

(72) Inventor: **KANEKO Takashi**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **NEGATIVE ELECTRODE AND POWER STORAGE ELEMENT**

(57)     A negative electrode according to one aspect of the present invention is a negative electrode for an energy storage device including a negative active material layer containing solid graphite, in which the solid graphite has an average circularity of 0.7 or less, and the negative active material layer further contains carbon fine particles.

Fig. 1

**Description**

TECHNICAL FIELD

The present invention relates to a negative electrode and an energy storage device.

BACKGROUND ART

Nonaqueous electrolyte solution secondary batteries typified by lithium ion secondary batteries are widely used for electronic devices such as personal computers and communication terminals, motor vehicles, and the like since these secondary batteries have a high energy density. Also, capacitors such as lithium ion capacitors and electric double-layer capacitors, energy storage devices with electrolytes other than nonaqueous electrolyte solution used, and the like are also widely used as energy storage devices other than nonaqueous electrolyte solution secondary batteries.
The energy storage device generally includes an electrode assembly in which a positive electrode containing a positive active material and a negative electrode containing a negative active material are stacked with a separator interposed therebetween. Such an electrode assembly is housed together with an electrolyte in a case to construct an energy storage device. As a negative active material, a carbon material such as graphite is widely used (see Patent Documents 1 and 2).

PRIOR ART DOCUMENTS

PATENT DOCUMENTS

Patent Document 1: JP-A-2005-222933
Patent Document 2: JP-A-2017-069039

SUMMARY OF THE INVENTION

PROBLEMS TO BE SOLVED BY THE INVENTION

The energy storage device is required to have various performances depending on a use environment or the like. For example, in an energy storage device assumed to be used under a low temperature environment, it is desired that high input performance can be exhibited even under a low temperature environment.
An object of the present invention is to provide a negative electrode capable of enhancing input performance of an energy storage device under a low temperature environment, and an energy storage device including such a negative electrode.

MEANS FOR SOLVING THE PROBLEMS

A negative electrode according to one aspect of the present invention is a negative electrode for an energy storage device including a negative active material layer containing solid graphite, in which the solid graphite has an average circularity of 0.7 or less, and the negative active material layer further contains carbon fine particles.
An energy storage device according to another aspect of the present invention is an energy storage device including the negative electrode according to one aspect of the present invention.

ADVANTAGES OF THE INVENTION

According to one aspect of the present invention, it is possible to provide a negative electrode capable of enhancing input performance of an energy storage device under a low temperature environment, and an energy storage device including such a negative electrode.

BRIEF DESCRIPTION OF THE DRAWINGS

Fig. 1 is a see-through perspective view illustrating an embodiment of an energy storage device.

Fig. 2 is a schematic diagram illustrating an embodiment of an energy storage apparatus including a plurality of the energy storage devices assembled.

MODE FOR CARRYING OUT THE INVENTION

First, outlines of a negative electrode and an energy storage device disclosed in the present specification will be described.

A negative electrode according to one aspect of the present invention is a negative electrode for an energy storage device including a negative active material layer containing solid graphite, in which the solid graphite has an average circularity of 0.7 or less, and the negative active material layer further contains carbon fine particles.

The negative electrode according to one aspect of the present invention can enhance input performance of the energy storage device under a low temperature environment. The reason for this is not clear, but the following reasons are presumed. In the case of solid graphite, the inside of the particles is hardly impregnated with an electrolyte such as an electrolyte solution, and therefore a contact area with the electrolyte is small, so that side reactions and film formation during charging and discharging hardly occur, and from this point, an increase in reaction resistance hardly occurs, whereby it is considered that input performance can be improved. However, since the average circularity of the solid graphite tends to be low in the production process, a filling rate of the negative active material layer containing the solid graphite is high. For this reason, in the negative active material layer containing the solid graphite, a void that can be held by the electrolyte generally becomes small, and as a result, supply of charge transport ions tends to be insufficient. In particular, under a low temperature environment, when the filling rate of the negative active material layer is high, supply shortage of charge transport ions becomes remarkable. On the other hand, in the negative electrode according to one aspect of the present invention, since the negative active material layer further contains carbon fine particles, and the carbon fine particles form a structure, an electrolyte retention property of the negative active material layer can be enhanced. As described above, according to the negative electrode according to one aspect of the present invention, it is considered that since a side reaction and film formation are small due to the use of solid graphite, and the charge transport ions are sufficiently supplied due to the sufficient retention of the electrolyte due to the inclusion of carbon fine particles, input performance of the energy storage device under a low temperature environment can be improved.

The term "solid" in the solid graphite means that the inside of the particle of graphite is dense and has substantially no void. More specifically, the term "solid" means that in a cross section of a particle observed in a SEM image acquired with the use of a scanning electron microscope (SEM), the void area ratio (porosity) in the particle to the area of the whole particle is 2% or less. In a preferred aspect, the void area ratio of the solid graphite may be 1% or less.

"The void area ratio (porosity) in the particle to the area of the whole particle" in the graphite particles can be determined by the following procedure.

(1) Preparation of sample for measurement

The negative electrode to be measured is fixed with a thermosetting resin. Cross Section Polisher (trade name) is used to expose the cross section of the negative electrode fixed with the resin by an ion milling method to fabricate a sample for measurement. It is to be noted that the negative electrode to be measured is prepared in accordance with the following procedure. The energy storage device is discharged at a constant current with a current of 0.1 C until the voltage becomes an end-of-discharge voltage under normal usage, so that the energy storage device is brought to a discharged state. The energy storage device in the discharged state is disassembled to take out the negative electrode, and the negative electrode is sufficiently washed with dimethyl carbonate, and then dried under reduced pressure at room temperature. The operations from the disassembly of the energy storage device to the preparation of the negative electrode to be measured are performed in a dry air atmosphere at a dew point of -40°C or lower.

(2) Acquisition of SEM image

For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is three or more and fifteen or less. The obtained SEM image is stored as an image file. In addition, various conditions such as a spot diameter, a working distance, an irradiation current, luminance, and a focus are appropriately set so as to make the contours of the graphite particles clear.

(3) Cut-out of contour of graphite particle

The contour of the graphite particle is cut out from the acquired SEM image by using an image cutting function of image editing software Adobe Photoshop Elements 11. The contour is cut out by using a quick selection tool to select the outside of the contour of the graphite particle and edit the part excluding the graphite particle to a black background. In this regard, when the number of graphite particles from which the contours have been able to be cut out is less than three, an SEM image is acquired again, and the cut-out is performed until the number of graphite particles from which the contours have been able to be cut out is three or more.

(4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as a "void area S 1 in the particles".

Then, the image of the same first graphite particle is subjected to binarization processing with a concentration of 10% as a threshold value. The outer edge of the graphite particle is determined by the binarization processing, and the area inside the outer edge is calculated as an "area S0 of the whole particle".

The ratio of S 1 to S0 (S 1/S0) is calculated with the use of S 1 and S0 calculated above to calculate a "void area ratio R1 in the particle to the area of the whole particle" in the first graphite particle.

The images of the second and subsequent graphite particles among the cut-out graphite particles are also each subjected to the binarization processing mentioned above, and the areas S 1 and S0 are calculated. Based on the calculated area S 1 and area S0, void area ratios R2, R3, ... of the respective graphite particles are calculated.

(5) Determination of void area ratio

The average value for all of the void area ratios R1, R2, R3, ... calculated by the binarization processing is calculated to determine "the area ratio (porosity) of the void in the particles with respect to the total area of the particles".

It is to be noted that, instead of the scanning electron microscope used for "the acquisition of the SEM image", the image editing software used for "the cut-out of the contours of the graphite particles", and the image analysis software used for the "binarization processing", apparatuses, software, and the like capable of the corresponding measurement, image editing, and image analysis may be used.

The term "graphite" refers to a carbon material in which an average grid spacing ($d_{002}$) of a (002) plane determined by X-ray diffraction before charge-discharge or in a discharged state is 0.33 nm or more and less than 0.34 nm. The "discharged state" of the carbon material means a state discharged such that lithium ions that can be stored and released in association with charge-discharge are sufficiently released from the carbon material that is the negative active material. For example, the "discharged state" refers to a state where the open circuit voltage is 0.7 V or higher in the half cell that has, for use as a working electrode, a negative electrode containing a carbon material as a negative active material, and has metal Li for use as a counter electrode.

The "average circularity" of solid graphite is an average value of circularity of each of any three particles of solid graphite. The circularity of each particle is measured from image analysis based on a SEM image of solid graphite. The SEM image of the solid graphite is acquired according to (1) and (2) of the procedure for determining "the area ratio (porosity) of the void in the particles with respect to the total area of the particles" in the graphite particles described above. The image analysis is performed using the image analysis software PopImaging 6.00 described in the determination procedure of the "the area ratio (porosity) of the void in the particles with respect to the total area of the particles" in the graphite particles described above. By the image analysis, the particle total area of any three solid graphite particles and a peripheral length of the particles are measured from the SEM image. The circularity of each particle of the solid graphite is calculated by the following formula, and the average value thereof is taken as the "average circularity" of the solid graphite.

$$\text{Circularity} = (4\pi \times \text{total area of particles})/(\text{peripheral length of particle})^2$$

The "carbon fine particles" refer to carbon particles having an average primary particle size of 500 nm or less. The "average primary particle size" is an average value of particle sizes of arbitrary 50 primary particles observed in a SEM image of carbon fine particles. The primary particles are particles in which no grain boundary is observed in appearance in the SEM image. The particle sizes of the primary particles are determined as follows. The shortest diameter passing through the center of the minimum circumscribed circle of the primary particle is defined as a minor axis, and the diameter passing through the center and orthogonal to the minor axis is defined as a major axis. The average value of the major axis and the minor axis is defined as the primary particle size. When there are two or more shortest diameters, a shortest diameter with the longest orthogonal diameter is defined as a minor axis.

The solid graphite preferably has an average particle size of 8 pm or less. By using solid graphite having a small particle size as described above, the resistance of the negative active material layer is reduced, and the input performance of the energy storage device under a low temperature environment can be further enhanced.

The "average particle size" means a value (median diameter) at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013). has been confirmed that the average particle size based on the measurement described above is almost equal to the average value of particle sizes of respective particles of the solid graphite measured by extracting 100 particles excluding extremely large particles and extremely small particles from the SEM image of the solid graphite. The particle size of each particle of solid graphite based on the measurement from the SEM image is determined as follows. The SEM image of the solid graphite is acquired according to (1) and (2) of the procedure for determining "the area ratio (porosity) of the void in the particles with respect to the total area of the particles" in the graphite particles described above. The shortest diameter passing through the center of the minimum circumscribed circle of each particle of the solid graphite is defined as a minor axis, and the diameter passing through the center and orthogonal to the minor axis is defined as a major axis. The average value of the major axis and the minor axis is defined as the particle size of each particle of the solid graphite. When there are two or more shortest diameters, a shortest diameter with the longest orthogonal diameter is defined as a minor axis.

The ratio of the average pore size of the negative active material layer to the average particle size of the solid graphite is preferably less than 0.14. Since the pores of the negative active material layer decrease as the content of carbon fine particles in the negative active material layer increases, the fact that a ratio of the average pore size of the negative active material layer to the average particle size of the solid graphite is small indicates that the content of carbon fine particles in the negative active material layer is large. Therefore, when the ratio of the average pore size of the negative active material layer to the average particle size of the solid graphite is less than 0.14, the effect of enhancing an electrolyte retention property of the negative active material layer by the carbon fine particles is particularly sufficiently exerted, and the input performance of the energy storage device under a low temperature environment can be further enhanced.

The "average pore size" of the negative active material layer is a value determined by the following method based on a pore distribution measured with a mercury porosimeter. "AutoPore 9600" is used as a measuring device, a contact angle of mercury is set to 130°, and the surface tension is set to 484 mN/m. A pore size range to be measured is set to 20 pm to 0.0055 pm, and a pore volume in this range is measured. Assuming that the pores are cylindrical, a pore volume V and a pore surface area A are expressed by the following equations.

$$V = \pi \times (d/2)^2 \times H$$

$$A = \pi \times d \times H$$

d: pore diameter, H: depth of pore (corresponding to height of cylinder)

In calculating the surface area, the area of the surface corresponding to both bottom faces of the cylinder can be ignored. From the two equations, the equation d = 4V/A is derived. Therefore, an average pore size d can be calculated from the equation of d = 4V/A using the values of the surface area A of the total pores and the total pore volume V. A sample of the negative active material layer to be measured is acquired according to (1) of the procedure for determining "the area ratio (porosity) of the void in the particles with respect to the total area of the particles" in the graphite particles described above.

An energy storage device according to another aspect of the present invention includes the negative electrode according to an aspect of the present invention. Since the energy storage device includes the negative electrode according to one aspect of the present invention, the input performance under a low temperature environment is high.

Hereinafter, a negative electrode according to an embodiment of the present invention, an energy storage device, an energy storage apparatus, a method for manufacturing the energy storage device, and other embodiments will be described in detail. It is to be noted that the names of the respective constituent members (respective constituent elements) for use in the respective embodiments may be different from the names of the respective constituent members (respective constituent elements) for use in the background art.

<Negative electrode>

The negative electrode according to an embodiment of the present invention includes a negative substrate and a negative active material layer disposed directly on the negative substrate or over the negative substrate with an intermediate layer interposed therebetween. The negative electrode is a negative electrode used for an energy storage device such as a secondary battery.

The negative substrate has conductivity. Whether the negative substrate has "conductivity" or not is determined with the volume resistivity of $10^7$ $\Omega$·cm measured in accordance with JIS-H-0505 (1975) as a threshold.

As the material for the negative substrate, a metal such as copper, nickel, stainless steel, or nickel-plated steel, or an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. When the average thickness of the negative substrate falls within the range mentioned above, the energy density per volume of the energy storage device can be increased while increasing the strength of the negative substrate. The "average thickness" of the negative substrate and the positive substrate described below refers to a value obtained by dividing a cutout mass in cutout of a substrate that has a predetermined area by a true density and a cutout area of the substrate.

The intermediate layer is a layer disposed between the negative substrate and the negative active material layer. The intermediate layer contains a conductive agent such as carbon particles, thereby reducing contact resistance between the negative substrate and the negative active material layer. The configuration of the intermediate layer is not particularly limited, and contains, for example, a binder and a conductive agent.

The negative active material layer contains solid graphite and carbon fine particles. The negative active material layer contains optional components such as a negative active material other than solid graphite, a conductive agent other than carbon fine particles, a binder, a thickener, and a filler as necessary.

The solid graphite is a component that functions as a negative active material. Since the negative active material layer of the negative electrode contains solid graphite, side reactions and film formation during charging and discharging are suppressed, and as a result, the input performance of the energy storage device under a low temperature environment can be enhanced.

The solid graphite may be solid natural graphite or solid artificial graphite, but is preferably solid natural graphite. By using solid natural graphite, the input performance of the energy storage device under a low temperature environment tends to be further enhanced. Although details are not clear, it is presumed that this is because the solid natural graphite has higher crystallinity than the solid artificial graphite.

The natural graphite is a generic term for graphite obtained from natural resources. The shape of the solid natural graphite is not particularly limited, and examples thereof include scale-like graphite, massive graphite (flake graphite), and earthy graphite. The solid natural graphite may be spheroidized natural graphite particles obtained by spheroidizing scale-like natural graphite or the like. The natural graphite may have four peaks appearing at diffraction angles 2θ in the range from 40° to 50° in an X-ray diffraction pattern obtained with the use of CuKα, measured before charge-discharge or in a discharged state. These four peaks are considered to be two peaks derived from a hexagonal structure and two peaks derived from a rhombohedral structure. In the case of artificial graphite, generally, only two peaks derived from the hexagonal structure appear. In the X-ray diffraction pattern, a ratio ((012)/(100)) of the peak intensity derived from the (012) plane to the peak intensity derived from the (100) plane is preferably 0.3 or more, more preferably 0.4 or more. The ratio of the peak intensities ((012)/(100)) is preferably 0.6 or less. Here, the (100) plane is derived from the hexagonal structure, and the (012) plane is derived from a rhombohedral structure.

The average particle size of the solid graphite is, for example, preferably 1 pm or more and 30 pm or less, more preferably 2 pm or more and 10 pm or less, and still more preferably 3 pm or more and 8 pm or less. By setting the average particle size of the solid graphite to be equal to or more than the lower limit mentioned above, the solid graphite is easily produced or handled. By setting the average particle size of the solid graphite to be equal to or less than the above upper limit, particularly 8 pm or less, the contact area between the solid graphites is increased, and the electron conductivity of the negative active material layer is improved.

A crusher, a classifier, or the like is used in order to obtain a solid graphite with a predetermined particle size. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet-type crushing in coexistence of water or an organic solvent such as hexane can also be used. As a classification method, a sieve, a pneumatic classifier and the like are used both in dry manner and in wet manner if necessary.

The upper limit of the average circularity of the solid graphite is 0.7, preferably 0.6, and more preferably 0.5.

When the average circularity of the solid graphite is equal to or less than the above upper limit, the contact area between the solid graphites is increased, and the electron conductivity of the negative active material layer tends to be improved. However, when the average circularity of the solid graphite is equal to or less than the above upper limit, the void that can be held by the electrolyte in the negative active material layer is reduced, so that it is necessary to contain carbon fine particles in the negative active material layer. On the other hand, the lower limit of the average circularity of the solid graphite is preferably 0.2, more preferably 0.3, and still more preferably 0.4. The average circularity of the solid graphite may be equal to or more than any of the above lower limits and equal to or less than any of the above upper limits. The average circularity of the solid graphite can be adjusted by the type of the negative active material and the production method.

The average primary particle size of the solid graphite is usually more than 500 nm, and preferably 1 pm or more.

The BET specific surface area of the solid graphite is preferably 1 $m^2/g$ or more and 15 $m^2/g$ or less, more preferably 3 $m^2/g$ or more and 10 $m^2/g$ or less. When the BET specific surface area of the solid graphite is within the above range, particularly good charge-discharge performance can be exhibited.

The "BET specific surface area" is a value measured by the following method. First, pore size distribution measurement using a nitrogen adsorption method is performed using "autosorb iQ" manufactured by Quantachrome Instruments as a measuring apparatus. Five points are extracted from a region having P/P0 of 0.05 or more and 0.2 or less in the acquired adsorption isotherm, BET plotting is performed, and the BET specific surface area is calculated from y-intercept and slope of the straight line.

The content of the solid graphite in the negative active material layer is preferably 60% by mass or more and 99% by mass or less, more preferably 90% by mass or more and 98% by mass or less, and may be further preferably 95% by mass or more. By setting the content of the solid graphite in the above range, it is possible to achieve both high energy density and productivity of the negative active material layer, and it is possible to further enhance the input performance of the energy storage device under a low temperature environment.

The negative active material layer may contain other negative active materials besides the solid graphite. Examples of other negative active materials include metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite other than solid graphite and non-graphitic carbon (easily graphitizable carbon or hardly graphitizable carbon). However, the content ratio of the solid graphite to all the negative active materials is preferably 80% by mass or more, more preferably 90% by mass or more, still more preferably 99% by mass or more, yet still more preferably 99.9% by mass or more, and particularly preferably 100% by mass. As described above, when the negative active material substantially includes only solid graphite, the input performance of the energy storage device under a low temperature environment can be further enhanced.

The content of the negative active material in the negative active material layer is preferably 60% by mass or more and 99% by mass or less, more preferably 90% by mass or more and 98% by mass or less, and may be still more preferably 95% by mass or more. The content of the negative active material falls within the range mentioned above, thereby allowing a balance to be achieved between the increased energy density and productivity of the negative active material layer.

The carbon fine particles are components that enhance the electrolyte retention property of the negative active material layer. The carbon fine particles can also function as a conductive agent. The carbon fine particles usually form a structure formed by aggregation of primary particles.

As the carbon fine particles, carbon black such as furnace black, acetylene black, or Ketjen black is suitably used. One or two or more of the carbon fine particles can be used.

The average primary particle size of the carbon fine particles is preferably 1 nm or more and 500 nm or less, more preferably 5 nm or more and 200 nm or less, still more preferably 10 nm or more and 100 nm or less.

The BET specific surface area of the carbon fine particles is preferably 20 $m^2/g$ or more and 150 $m^2/g$ or less, more preferably 30 $m^2/g$ or more and 100 $m^2/g$ or less. When the BET specific surface area of the carbon fine particles is within the above range, the electrolyte retention property of the negative active material layer can be further enhanced.

The content of the carbon fine particles in the negative active material layer is, for example, preferably 0.1% by mass or more and 5% by mass or less, more preferably 0.5% by mass or more and 2% by mass or less. The content of the carbon fine particles is set to be equal to or more than the lower limit described above, thereby allowing the electrolyte retention property of the negative active material layer to be sufficiently enhanced. On the other hand, by setting the content of the carbon fine particles to be equal to or less than the upper limit described above, the energy density of the negative electrode can be increased.

The negative active material layer may further contain a conductive agent other than carbon fine particles. The other conductive agent is not particularly limited as long as it is a material exhibiting electrical conductivity. Examples of such a conductive agent include carbonaceous materials other than the carbon fine particles, metals, and conductive ceramics. Examples of the carbonaceous material other than carbon fine particles include carbon nanofibers, pitch-based carbon fibers, graphene, carbon nanotubes (CNT), and fullerene. Since the negative active material layer of the negative electrode contains the solid graphite and the carbon fine particles, the negative active material layer usually has sufficient electron conductivity. Thus, in an embodiment of the present invention, the negative active material layer may not contain a conductive agent other than the carbon fine particles.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the negative active material layer is preferably 0.1% by mass or more and 10% by mass or less, more preferably 0.3% by mass or more and 5% by mass or less, still more preferably 0.5% by mass or more and 2% by mass or less. The content of the binder falls within the range mentioned above, thereby allowing the negative active material to be stably held.

Examples of the thickener include polysaccharide polymers such as carboxymethylcellulose (CMC) and methylcellulose. When the thickener mentioned above has a functional group that is reactive with lithium and the like, the functional group may be deactivated by methylation or the like in advance. The content of the thickener in the negative active material layer is preferably 0.1% by mass or more and 5% by mass or less, more preferably 0.5% by mass or more and 2% by mass or less.

The filler is not particularly limited. Examples of the filler include: polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. The content of the filler in the negative active material layer is, for example, 0.1% by mass or more and 5% by mass or less. The content of the filler in the negative active material layer may be 1% by mass or less, 0.1% by mass or less, or 0% by mass.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the negative active material, the carbon fine particles, other conductive agents, the binder, the thickener, and the filler.

The average pore size of the negative active material layer is preferably 0.3 pm or more and 2 pm or less, more preferably 0.5 pm or more and 1.5 pm or less, still more preferably 0.7 pm or more and 1.1 pm or less. When the average pore size of the negative active material layer is within the above range, the electron conductivity of the negative active material layer, the electrolyte retention property, and the like are optimized in a well-balanced manner.

The ratio (average pore size/average particle size) of the average pore size of the negative active material layer to the average particle size of the solid graphite may be, for example, 0.2 or less, and is preferably less than 0.14, more preferably 0.13 or less. When the ratio of the average pore size of the negative active material layer to the average particle size of the solid graphite is less than 0.14, the electrolyte retention property of the negative active material layer by the carbon fine particles is particularly sufficiently exerted, and the input performance of the energy storage device under a low temperature environment can be further enhanced. The ratio of the average pore size of the negative active material layer to the average particle size of the solid graphite is preferably 0.05 or more, more preferably 0.07 or more, still more preferably 0.09 or more. The ratio of the average pore size of the negative active material layer to the average particle size of the solid graphite can be within a range of any of the above lower limits and any of the above upper limits.

The negative electrode can be produced, for example, by applying a negative composite paste to a negative substrate directly or via an intermediate layer, followed by drying. After the drying, pressing or the like may be performed, if necessary. The negative composite paste contains various components constituting the negative active material layer, such as solid graphite, carbon fine particles, and a binder as an optional component. The negative composite paste typically further contains a dispersion medium.

<Energy storage device>

An energy storage device according to an embodiment of the present invention includes: an electrode assembly including a positive electrode, a negative electrode, and a separator; an electrolyte; and a case that houses the electrode assembly and the electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The electrolyte is present with the positive electrode, negative electrode, and separator impregnated with the electrolyte. As an example of the energy storage device, a nonaqueous electrolyte secondary battery (hereinafter, also simply referred to as a "secondary battery") using a nonaqueous electrolyte as an electrolyte will be described.

(Positive electrode)

The positive electrode includes a positive substrate and a positive active material layer disposed directly on the positive substrate or over the positive substrate with an intermediate layer interposed therebetween. The configuration of the intermediate layer is not particularly limited, and for example, can be selected from the configurations exemplified for the negative electrode.

The positive substrate has conductivity. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 $\mu$m or more and 30 pm or less, and particularly preferably 10 pm or more and 25 pm or less. By setting the average thickness of the positive substrate to the above range, it is possible to increase the energy density per volume of a secondary battery while increasing the strength of the positive substrate.

The positive active material layer contains a positive active material. The positive active material layer contains optional components such as a conductive agent, a binder, a thickener, and a filler and the like as necessary. The optional components such as a conductive agent, a binder, a thickener, and a filler can be selected from the materials exemplified for the negative electrode. As the conductive agent of the positive active material layer, carbon fine particles such as graphite and carbon black can also be used.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-$NaFeO_2$-type crystal structure, lithium-transition metal composite oxides that have a spinel-type crystal structure, polyanion compounds, chalcogenides, and sulfur. Examples of the lithium-transition metal composite oxides that have an $\alpha$-$NaFeO_2$-type crystal structure include $Li[Li_xNi_{(1-x)}]O_2$ ($0 \leq x < 0.5$), $Li[Li_xNi_yCo_{(1-x-\gamma)}]O_2$ ($0 \leq x < 0.5$, $0 < \gamma < 1$, $0<1-x-\gamma$), $Li[Li_xCo_{(1-x)}]O_2$ ($0 \leq x < 0.5$), $Li[Li_xNi_\gamma Mn_{(1-x-\gamma)}]O_2$ ($0 \leq x < 0.5$, $0 < \gamma < 1$, $0 < 1-x-\gamma$), $Li[Li_xNi_\gamma Mn_\beta Co_{(1-x-\gamma-\beta)}]O_2$ ($0 \leq x < 0.5$, $0 < \gamma$, $0 < \beta$, $0.5 < \gamma + \beta < 1$, $0 < 1-x-\gamma-\beta$), and $Li[Li_xNi_\gamma Co_\beta Al_{(1-x-\gamma-\beta)}]O_2$ ($0 \leq x < 0.5$, $0 < \gamma$, $0 < \beta$, $0.5 < \gamma + \beta < 1$, $0 < 1-x-\gamma-\beta$). Examples of the lithium transition metal composite oxides that have a spinel-type crystal structure include $Li_xMn_2O_4$ and $Li_xNi_\gamma Mn_{(2-\gamma)}O_4$. Examples of the polyanion compounds include $LiFePO_4$, $LiMnPO_4$, $LiNiPO_4$, $LiCoPO_4$, $Li_3V_2(PO_4)_3$, $Li_2MnSiO_4$, and $Li_2CoPO_4F$. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials. In the positive active material layer, one of these materials may be used singly, or two or more thereof may be used in mixture.

The positive active material is usually a particle (powder). The average particle size of the positive active material is preferably 0.1 pm or more and 20 pm or less, for example. By setting the average particle size of the positive active material to be equal to or more than the lower limit mentioned above, the positive active material is easily produced or handled. By setting the average particle size of the positive active material to be equal to or less than the upper limit mentioned above, the electron conductivity of the positive active material layer is improved. It is to be noted that in the case of using a composite of the positive active material and another material, the average particle size of the composite is regarded as the average particle size of the positive active material.

The content of the positive active material in the positive active material layer is preferably 50% by mass or more and 99% by mass or less, more preferably 70% by mass or more and 98% by mass or less, and still more preferably 80% by mass or more and 95% by mass or less. By setting the content of the positive active material in the above range, it is possible to achieve both high energy density and productivity of the positive active material layer.

The positive active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W as a component other than the positive active material, the conductive agent, the binder, the thickener, and the filler.

The positive electrode can be fabricated, for example, by applying a positive composite paste to a positive substrate directly or with an intermediate layer interposed therebetween, and drying the paste. After the drying, pressing or the like may be performed, if necessary. The positive composite paste contains components constituting the positive active material layer such as the positive active material, and a conductive aid or a binder as an optional component. The positive composite paste typically further includes a dispersion medium.

(Negative electrode)

The negative electrode provided in the secondary battery is the above-described negative electrode as the negative electrode according to an embodiment of the present invention.

(Separator)

The separator can be appropriately selected from publicly known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of the retention property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with the porous resin film or the nonwoven fabric or the like as described above.

(Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, an inorganic lithium salt is preferable, and $LiPF_6$ is more preferable.

The content of the electrolyte salt in the nonaqueous electrolyte solution is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, and particularly preferably 0.7 mol/dm$^3$ or more and 1.5 mol/dm$^3$ or less. When the content of the electrolyte salt is in the above range, it is possible to increase the ionic conductivity of the nonaqueous electrolyte solution.

The nonaqueous electrolyte solution may contain an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

As the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include sulfide solid electrolytes, oxide solid electrolytes, oxynitride solid electrolytes, and polymer solid electrolytes.

Examples of the sulfide solid electrolyte include $Li_2S$-$P_2S_5$, $LiI$-$Li_2S$-$P_2S_5$, and $Li_{10}Ge$-$P_2S_{12}$.

The shape of the energy storage device of the present embodiment is not particularly limited, and examples thereof include cylindrical batteries, prismatic batteries, flat batteries, coin batteries and button batteries.

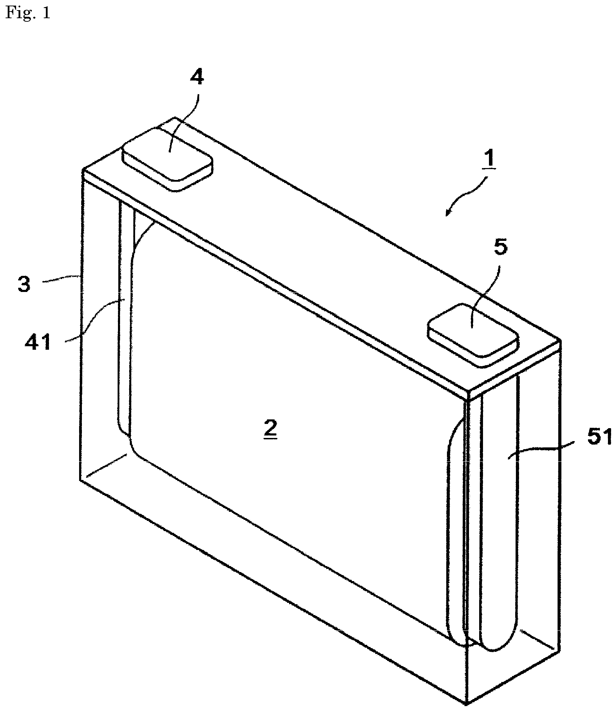

Fig. 1 shows an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

<Energy storage apparatus>

The energy storage device according to the present embodiment can be mounted as an energy storage unit (battery module) configured with a plurality of energy storage devices 1 assembled, on power sources for automobiles such as electric vehicles (EV), hybrid vehicles (HEV), and plug-in hybrid vehicles (PHEV), power sources for electronic devices such as personal computers and communication terminals, power sources for power storage, or the like. In this case, the technique of the present invention may be applied to at least one energy storage device included in the energy storage unit.

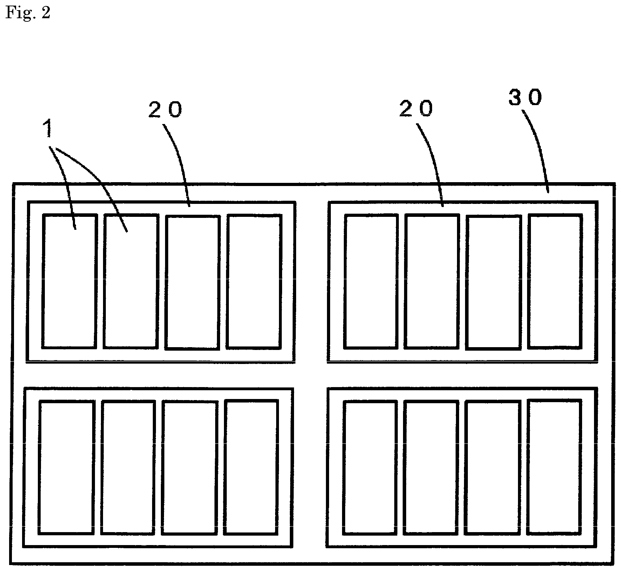

Fig. 2 shows an example of an energy storage apparatus 30 formed by assembling energy storage units 20 in each of which two or more electrically connected energy storage devices 1 are assembled. The energy storage apparatus 30 may include a busbar (not illustrated) for electrically connecting two or more energy storage devices 1, a busbar (not illustrated) for electrically connecting two or more energy storage units 20, and the like. The energy storage unit 20 or the energy storage apparatus 30 may include a state monitor (not illustrated) that monitors the state of one or more energy storage devices.

<Method for producing energy storage device>

A method for manufacturing the energy storage device of the present embodiment can be appropriately selected from known methods. The manufacturing method includes, for example, preparing an electrode assembly, preparing an electrolyte, and housing the electrode assembly and the electrolyte in a case. The preparation of the electrode assembly includes: preparing a positive electrode and a negative electrode, and forming an electrode assembly by stacking or winding the positive electrode and the negative electrode with a separator interposed therebetween.

Housing the electrolyte in a case can be appropriately selected from known methods. For example, when a nonaqueous electrolyte solution is used for the electrolyte, the nonaqueous electrolyte solution may be injected from an inlet formed in the case, followed by sealing the inlet.

<Other embodiments>

It is to be noted that the energy storage device according to the present invention is not limited to the embodiment mentioned above, and various changes may be made without departing from the scope of the present invention. For example, the configuration according to one embodiment can be added to the configuration according to another embodiment, or a part of the configuration according to one embodiment can be replaced with the configuration according to another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, and capacity and the like of the energy storage device are arbitrary. The present invention can also be applied to various secondary batteries, and capacitors such as electric double layer capacitors and lithium ion capacitors. In addition, the energy storage device according to the present invention can also be applied to an energy storage device in which the electrolyte is an electrolyte other than the nonaqueous electrolyte, that is, an energy storage device in which the electrolyte contains water, and the like.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

EXAMPLES

Hereinafter, the present invention will be described more specifically by way of examples, but the present invention is not limited to the following examples.

[Example 1]

(Fabrication of negative electrode)

Solid natural graphite (average particle size (a): 7.7 pm, BET specific surface area: 6 $m^2$/g) as the negative active material, carbon black (CB, BET specific surface area: 60 $m^2$/g) as carbon fine particles, styrenebutadiene rubber (SBR) as a binder, carboxymethyl cellulose (CMC) as a thickener, and water as a dispersion medium were mixed to prepare a negative composite paste. It is to be noted that the mass ratios of solid natural graphite, CB, SBR, and CMC were set to be 97 : 1 : 1 : 1 (in terms of solid content). The negative composite paste was applied onto both surfaces of a copper foil as a negative substrate and dried to form an unpressed negative active material layer. Thereafter, the unpressed negative active material layer was roll-pressed to obtain a negative electrode. The porosity of the solid natural graphite in the negative active material layer of the obtained negative electrode obtained by the method described above was 0.5%, and the average circularity thereof was 0.52. An average pore size (b) of the negative active material layer was 1.03 pm, and a ratio (b/a) of the average pore size (b) of the negative active material layer to the average particle size (a) of solid graphite was 0.13.

(Fabrication of positive electrode)

A positive composite paste was prepared with the use of $LiNi_{1/3}Co_{1/3}Mn_{1/3}O_2$ as a positive active material, acetylene black (AB) as a conductive agent, polyvinylidene fluoride (PVDF) as a binder, and N-methylpyrrolidone (NMP) as a dispersion medium. It is to be noted that the mass ratios of the positive active material, AB, and PVDF were set to be 93 : 4 : 3 (in terms of solid content). The positive composite paste was applied to both surfaces of an aluminum foil as a positive substrate, and dried. Thereafter, roll pressing was performed to obtain a positive electrode.

(Preparation of electrolyte)

LiPFs was dissolved at a concentration of 1.2 $mol/dm^3$ in a solvent obtained by mixing an ethylene carbonate and an ethyl methyl carbonate at a volume ratio of 30 : 70 to prepare an electrolyte.

(Fabrication of energy storage device)

The positive electrode and the negative electrode were stacked with the separator interposed therebetween, thereby fabricating an electrode assembly. A polyolefin microporous membrane was used for the separator. The electrode assembly was housed in a case, the electrolyte was injected into the case, and the case was then sealed to obtain an energy storage device (nonaqueous electrolyte secondary battery) of Example 1.

[Comparative Examples 1 to 4]

Energy storage devices of Comparative Examples 1 to 4 were obtained similarly to Example 1 except that the type of the negative active material and the presence or absence of the carbon fine particles (CB) were as shown in Table 1. When carbon fine particles were not used, the mass ratio of the negative active material, SBR, and CMC was 98: 1: 1 (in terms of solid content). Table 1 shows the porosity and average circularity of natural graphite measured in the negative active material layer of the negative electrode of each Comparative Example, the average pore diameter (b) of the negative active material layer and the ratio (b/a) of the average pore size (b) of the negative active material layer to the average particle size (a) of the negative active material.

(Evaluation: input performance under low temperature environment)

Each of the energy storage devices obtained was subjected to constant current charge up to 4.1 V at a charge current of 1.0 C under a temperature environment of 25°C, and then to constant voltage charge at 4.1 V. With regard to the charge termination conditions, charge was performed until the total charge time reached 3 hours. After a pause period of 10 minutes, constant current discharge was performed up to 2.5 V at a discharge current of 1.0 C, and a pause period of 10 minutes was provided. The charging and discharging steps constituted one cycle, and the cycle was performed 2 cycles.

Thereafter, constant current charge was performed at a charge current of 1.0 C under a temperature environment of 25°C to set the state of charge (SOC) to 50%. The energy storage device was stored in a thermostatic bath at -30°C for 4 hours, and then charged at a constant current of 0.2 C, 0.5 C, or 1.0 C for 10 seconds. After completion of each charge, constant current discharge was performed at a current of 0.05 C to set the SOC to 50%. From a relationship between the current in each charge and the voltage 10 seconds after the start of charge, a current (A0) when the voltage 10 seconds after the start of charge reached 4.1 V was calculated, and a product (4.1 $\times$ A0) of the voltage (4.1 V) and the current (A0) was determined and used as an input. Relative values (%) of the inputs to the respective energy storage devices were obtained when the input to the energy storage device of Comparative Example 1 was taken as 100%. The results are shown in Table 1.

[Table 1]

| | Negative active material | | | | Carbon fine particle | Average pore size (b) /μm | b/a | Input (relative value) /% |
|---|---|---|---|---|---|---|---|---|
| | - | Average particle size (a) /μm | Porosity /% | Average circularity | | | | |
| Comparative Example 1 | Hollow natural graphite | 10.0 | 3.7 | 0.82 | Absence | 1.42 | 0.14 | 100 |

(continued)

| | Negative active material | | | | Carbon fine particle | Average pore size (b) /μm | b/a | Input (relative value) /% |
|---|---|---|---|---|---|---|---|---|
| | - | Average particle size (a) /μm | Porosity /% | Average circularity | | | | |
| Comparative Example 2 | Hollow natural graphite | 6.6 | 7.6 | 0.77 | Absence | 1.04 | 0.16 | 106 |
| Comparative Example 3 | Hollow natural graphite | 6.6 | 7.6 | 0.71 | Presence | 1.03 | 0.16 | 107 |
| Comparative Example 4 | Solid natural graphite | 7.7 | 0.5 | 0.52 | Absence | 1.16 | 0.15 | 104 |
| Example 1 | Solid natural graphite | 7.7 | 0.5 | 0.52 | Presence | 1.03 | 0.13 | 112 |

As shown in Table 1, the energy storage device of Example 1 has higher input performance under a low temperature environment than the energy storage devices of Comparative Examples 1 to 4. Comparison between Comparative Example 2 and Comparative Example 3 shows that when the negative active material is hollow graphite, the effect of enhancing the input performance by carbon fine particles is slight; however, comparison between Comparative Example 4 and Example 1 shows that when the negative active material is solid graphite, the input performance is remarkably enhanced by carbon fine particles. From comparison between Comparative Example 1 and Comparative Example 2 and the like, it can also be confirmed that the input performance of the energy storage device tends to be enhanced by using a negative active material (graphite) having a small average particle size.

INDUSTRIAL APPLICABILITY

The present invention can be applied to an electrolyte energy storage device used as a power source for electronic devices such as personal computers and communication terminals, automobiles, and the like.

DESCRIPTION OF REFERENCE SIGNS

    1: Energy storage device
    2: Electrode assembly
    3: Case
    4: Positive electrode terminal
    41: Positive electrode lead
    5: Negative electrode terminal
    51: Negative electrode lead
    20: Energy storage unit
    30: Energy storage apparatus

Claims

1. A negative electrode for an energy storage device comprising a negative active material layer containing solid graphite, wherein the solid graphite has an average circularity of 0.7 or less, and the negative active material layer further contains carbon fine particles.

2. The negative electrode according to claim 1, wherein the solid graphite has an average particle size of 8 pm or less.

3. The negative electrode according to claim 1 or 2, wherein a ratio of an average pore size of the negative active material layer to the average particle size of the solid graphite is less than 0.14.

4. An energy storage device comprising the negative electrode according to claim 1 or 2.

5. An energy storage device comprising the negative electrode according to claim 3.

Fig. 1

Fig. 2

| INTERNATIONAL SEARCH REPORT | International application No. |
|---|---|
| | PCT/JP2022/024787 |

**A. CLASSIFICATION OF SUBJECT MATTER**

*H01M 4/133*(2010.01)i; *H01M 4/587*(2010.01)i; *H01M 4/62*(2006.01)i; *H01G 11/42*(2013.01)i; *H01M 10/052*(2010.01)i
FI: H01M4/133; H01M10/052; H01M4/587; H01M4/62 Z; H01G11/42

According to International Patent Classification (IPC) or to both national classification and IPC

**B. FIELDS SEARCHED**

Minimum documentation searched (classification system followed by classification symbols)

H01M4/133; H01M4/587; H01M4/62; H01G11/42; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/221895 A1 (SHOWA DENKO KK) 28 December 2017 (2017-12-28) paragraphs [0014], [0023]-[0030], [0045], [0080] | 1-2, 4-5 |
| A | | 3 |
| A | JP 2015-165510 A (HITACHI CHEMICAL CO LTD) 17 September 2015 (2015-09-17) paragraph [0035] | 1-5 |
| A | JP 2000-226206 A (KANSAI COKE & CHEM CO LTD) 15 August 2000 (2000-08-15) claims, paragraph [0033] | 1-5 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/024787**

| Patent document cited in search report | Publication date (day/month/year) | Patent family member(s) | Publication date (day/month/year) |
|---|---|---|---|
| WO 2017/221895 A1 | 28 December 2017 | US 2019/0237763 A1 paragraphs [0021]-[0036], [0046]-[0060], [0083]-[0085], [0149]-[0150] EP 3477749 A1 KR 10-2019-0003695 A CN 109314239 A | |
| JP 2015-165510 A | 17 September 2015 | (Family: none) | |
| JP 2000-226206 A | 15 August 2000 | (Family: none) | |

Form PCT/ISA/210 (patent family annex) (January 2015)

**REFERENCES CITED IN THE DESCRIPTION**

**Patent documents cited in the description**

- JP 2005222933 A
- JP 2017069039 A